# EUROPÄISCHE PATENTSCHRIFT

(11) **EP 0 897 959 B1**
(45) Veröffentlichungstag und Bekanntmachung des Hinweises auf die Patenterteilung: **22.01.2003**
(21) Anmeldenummer: 98115728.2
(22) Anmeldetag: 20.08.1998
(51) Int. Cl.: C09D 5/32, C09D 5/00, C09K 5/06

(54) **Fassadenabdeckung**
Facade covering of houses
Revêtement des parois de maisons

(30) Priorität: 21.08.1997 DE 19736435
(43) Veröffentlichungstag der Anmeldung: 24.02.1999
(73) Patentinhaber: STO AG, D-79780 Stühlingen (DE)
(72) Erfinder: Zwerger, Markus, 79848 Bonndorf (DE)
(74) Vertreter: Patentanwälte Leinweber & Zimmermann

(56) Entgegenhaltungen:
- WO-A-96/39473
- DE-A- 3 432 998
- DE-A- 4 418 214
- DE-A- 19 501 114
- FR-A- 2 400 088
- US-A- 4 747 240

## Beschreibung

Die Erfindung betrifft eine Fassadenabdeckung, insbesondere in Form eines Wärmedämmverbundsystems oder einer vorgehängten Fassade, mit einer zur Umgebung freiliegenden äußeren Schicht.

Fassadenabdeckungen dieser Art werden seit langem zur optischen Gestaltung von Gebäuden eingesetzt, wobei durch die Wahl einer geeigneten äußeren Schicht der gewünschte optische Gesamteindruck erzielt wird. Neben Fassadenabdeckungen aus Aluminium, Edelstahl und Stahl werden heute hauptsächlich Fassadenabdeckungen eingesetzt, bei denen die äußere Schicht eine Farbe oder ein Putz ist.

In den letzten Jahren wurden die bekannten Fassadenabdeckungen dahingehend weiterentwickelt, daß sie neben dem Erhalt des gewünschten optischen Gesamteindrucks auch noch die Einsparung von Heizenergie ermöglichen.

Zu diesem Zweck wurden unter anderem Wärmedämmverbundsysteme, wie sie in der DE 32 02 960 beschrieben sind, vorgeschlagen. Diese Wärmedämmverbundsysteme umfassen im allgemeinen eine auf der abzudeckenden Fassade, beispielsweise dem Mauerwerk befestigte Wärmedämmplatte, beispielsweise aus extrudiertem Polystyrolhartschaum oder Mineralwolle. Auf dieser Wärmedämmplatte ist bei den bekannten Wärmedämmverbundsystemen eine mehrlagige, armierte Putzbeschichtung, bestehend aus einer Armierungsschicht, die wiederum aus einer Armierungsmasse und einem Armierungsgewebe gebildet sein kann, und einer Deckbeschichtung aus einem Kunstharz- oder mineralischen Putz, gegebenenfalls mit einem Voranstrich auf der Armierungsschicht, angeordnet. Zur weiteren farblichen Gestaltung oder Veredelung bzw. Verbesserung der Eigenschaften kann zusätzlich eine Farbe aufgebracht werden. Mit diesem Beschichtungssystem wird zum einen die Wärmedämmplatte vor Verwitterung geschützt, zum anderen kann damit der gewünschte optische Gesamteindruck erreicht werden.

Daneben wurden auch noch hinterlüftete, vorgehängte Fassaden vorgeschlagen, wie sie in der EP 059 977 beschrieben sind. Diese vorgehängten Fassaden umfassen im allgemeinen ein auf massiven Außenmauern, Holzwänden und dergleichen befestigtes Gitter- oder Lattenrost, auf dem eine Plattenverkleidung aus bündig abschließenden Platten angebracht ist. Zur Herstellung des gewünschten optischen Gesamteindrucks ist auf diesen Platten eine Armierungsschicht und eine Deckbeschichtung aufgebracht. Die gewünschte Wärmedämmung wird bei derartigen, hinterlüfteten, vorgehängten Fassaden dadurch erreicht, daß zwischen die Plattenverkleidung und das Gitter- oder Lattenrost ein wärmeisolierendes Material angefüllt wird.

Mit beiden Fassadenabdeckungen wird ein guter Wärmeschutz erreicht, weil mit Hilfe der Wärmedämmplatten bzw. des angefüllten wärmeisolierenden Materials ein äußerst geringer Wärmedurchgangskoeffizient der Fassadenabdeckung erhalten wird.

Es hat sich jedoch gezeigt, daß das äußere Erscheinungsbild von Fassadenabdeckungen in Form von Wärmedämmverbundsystemen oder vorgehängten Fassaden sich aufgrund von Verschmutzungen viel schneller verschlechtert, als bei herkömmlichen Fassadenabdeckungen.

Ein ähnliches Phänomen wurde auch beim Austausch herkömmlicher Glasscheiben gegen Wärmedämmverglasungen beobachtet. Zur Behebung dieses Mangels wurde in der DE 43 02 375 A1 vorgeschlagen, Glasscheiben, insbesondere Wärmedämmverglasungen mit einer den Durchgang von Wärmestrahlung hemmenden äußeren Beschichtung zu versehen, um so ein Auskühlen der Scheiben und eine damit verbundene Kondensatbildung und/oder Vereisung zu verhindern. Zu diesem Zweck wurde in der DE 43 02 375 A1 insbesondere der Einsatz von für sichtbares Licht durchlässigen Wärmeschutzbeschichtungen vorgeschlagen.

Derartige üblicherweise in Form von optischen Interferenzfiltern gebildete Wärmeschutzbeschichtungen sind in Verbindung mit Fassadenabdeckungen aus mehreren Gründen kaum einsetzbar. Zum einen unterliegen diese Wärmeschutzbeschichtungen einem starken mechanischen Verschleiß, so daß ihre Wirkung nicht über einen längeren Zeitraum aufrecht erhalten werden kann. Zum anderen ist die Beschichtung üblicher, eine unregelmäßige Oberfläche aufweisender Putze mit derartigen Interferenzfiltern nur mit einem hohen Arbeitsaufwand möglich.

Aus der DE 44 18 214 und der DE 195 01 114 sind Anstrichstoffe bekannt, die mit einem niedrigen Emissions- bzw. hohen Reflexionsvermögen zumindest im Wellenlängenbereich der Wärmestrahlung (5 bis 100 µm) ausgestattet sind, während sie im Nahinfrarotbereich ein hohes Absorptionsvermögen aufweisen. Ähnlich den beschichteten Glasscheiben der DE 43 02 375 A1 werden Oberflächen, die mit diesen Anstrichstoffen beschichtet werden, weniger zur Kondensatbildung und Vereisung neigen. Es hat sich jedoch gezeigt, daß auch der Einsatz dieser Anstrichstoffe eine erhöhte Verschmutzungsneigung zur Folge hat, wie im folgenden näher erläutert wird.

Angesichts dieser Probleme im Stand der Technik liegt der Erfindung die Aufgabe zugrunde, eine Fassadenabdeckung der eingangs beschriebenen Art bereitzustellen, die unter Gewährleistung einer zufriedenstellenden Einsparung von Heizenergie eine möglichst geringe Verschmutzungsneigung aufweist.

Diese Aufgabe wird erfindungsgemäß durch eine Fassadenabdeckung gelöst, die im wesentlichen dadurch gekennzeichnet ist, daß sie einer die Verschmutzungsneigung ihrer äußeren Schicht erhöhenden Temperaturänderung der Oberfläche der äußeren Schicht entgegenwirkende Bestandteile in Form einer Speichersubstanz mit einer Phasenumwandlungstemperatur bei Normaldruck im Bereich von 10 bis 30 °C, vorzugsweise etwa 20 °C aufweist, und für von außen senkrecht darauf auftreffende elektromagnetische Wellen mit einer Wellenlänge von 0,8 bis 2,5 µm einen mittleren Reflexionskoeffizienten von weniger als 0,8 sowie für von außen darauf auftreffende elektromagnetische Wellen mit Wellenlängen von 5 bis 50 µm einen mittleren Reflexionskoeffizienten von mehr als 0,4 besitzt.

Diese Lösung der der Erfindung zugrundeliegenden Aufgabe beruht auf der Erkenntnis, daß die erhöhte Verschmutzungsneigung von wärmedämmenden Fassadenabdeckungen auf die Tatsache zurückzuführen ist, daß diese Fassadenabdeckungen aufgrund ihrer wärmeisolierenden Eigenschaften eine geringe Wärmeleitfähigkeit und Wärmekapazität aufweisen, so daß sie sehr schnell durch ihre Verschmutzungsneigung erhöhende Temperaturänderungen auf Umwelteinflüsse reagieren.

Diese Verschmutzungsneigung tritt besonders deutlich bei Fassadenabdeckungen hervor, bei denen Putz- oder Farbschichten zur optischen Gestaltung eingesetzt werden, die ein organisches Bindemittel aufweisen. Diese organischen Bindemittel zeigen im getrockneten Zustand ein plastisches, meist auch elastisches Verhalten. Diese als Filmbildung bekannte Eigenschaft beruht auf der physikalischen Trocknung bzw. der Verdunstung des in der Farbe bzw. dem Putz enthaltenen Wassers. Bei dieser Verdunstung koaleszieren die Kunstharzteilchen des organischen Bindemittels zu einem zusammenhängenden Film.

Diese Verschmutzung kann dadurch erklärt werden, daß Schmutzpartikel besonders bevorzugt auf solchen thermoplastischen Oberflächen haften.

Dieser Effekt tritt besonders ausgeprägt bei direkter Sonneneinstrahlung ausgesetzten, wärmegedämmten Fassaden auf, weil die nach außen freiliegenden Oberflächen derartiger Fassaden aufgrund der Absorption der auf die Fassade auftreffenden Strahlungsenergie und der verminderten Wärmeleitfähigkeit und Wärmekapazität an der Oberfläche sehr warm und somit wesentlich plastischer als ungedämmte Fassaden werden. Daher verschmutzen herkömmliche wärmegedämmte Fassaden mit ein organisches Bindemittel aufweisenden äußeren Schichten schneller als ungedämmte Fassaden.

Ferner führt die geringe Leitfähigkeit und Wärmekapazität wärmegedämmter Fassaden nachts und in der kalten Jahreszeit dazu, daß durch Abstrahlung an die kalte Umgebung (Nachthimmel) die Temperaturen an der Oberfläche der Fassaden deutlich unter den Temperaturen der Oberflächen ungedämmter Fassaden liegen. Die niedrigen Oberflächentemperaturen bei kalter Außenwitterung führen in der Umgebung wärmegedämmter Fassaden zu einer Senkung des Wasser-Sättigungsdampfdrucks in der Luft, was bei einer gegebenen absoluten Wasserkonzentration in der Umgebungsluft zu einer Erhöhung der relativen Luftfeuchtigkeit bis hin zur Taupunktunterschreitung und damit zu einer erhöhten Wasserdampfsorption führt. Wasser ist jedoch in der Lage, Staub zu binden. Durch die Wasseraufnahme und das damit verbundene Quellen der Putzsysteme kommt es zu einem Einlagern der Staubpartikel in die Oberfläche. Wärmegedämmte Fassaden neigen daher auch aufgrund der erhöhten Feuchtigkeit zu verstärkter Verschmutzung.

Zusammenfassend kann somit festgestellt werden, daß die erhöhte Verschmutzungsneigung in direktem Zusammenhang mit der Oberflächentemperatur der Fassadenabdeckung steht. Die Temperatur wiederum wird beeinflußt durch die spektralen Emissions- und Reflexionseigenschaften, sowie die thermischen Wärmeleitungs- und Speichereigenschaften der Fassadenabdeckung.

Die erfindungsgemäße Lösung der Aufgabe besteht nun darin, eine Erhöhung der thermischen Speicherfähigkeit einer wärmegedämmten Fassade mit einer verringerten Emission der aus dem Gebäudeinneren' bzw,. durch Absorption solarer Energie aufgenommenen Wärme zu kombinieren. Erreicht wird hierdurch eine Senkung der hohen Temperaturen bei Sonneneinstrahlung sowie eine Erhöhung der Temperatur in den Nachtstunden bzw. in der kalten Jahreszeit.

Durch die erfindungsgemäße Einlagerung einer Speichersubstanz mit einer Phasenumwandlungstemperatur im Bereich von 10 bis 30 °C, insbesondere bei etwa 20°C in eine Fassadenabdeckung kann dem Auskühlen der Oberfläche derartiger Fassadenabdeckungen und der damit einhergehenden, die unerwünschte Einlagerung von Staubpartikeln in die Oberfläche verursachenden Wasserdampfsorption entgegengewirkt werden. Diese Wirkung kann wie folgt erklärt werden:

Bei Erwärmung der Fassadenabdeckung durch Sonneneinstrahlung oder unter dem Einfluß von Wärmestrahlung aus der Umgebung überschreitet die Speichersubstanz die Phasenumwandlungstemperatur. Die dazu benötigte Umwandlungswärme, beispielsweise die Schmelzwärme bei einer Phasenumwandlung von einer festen Phase in die flüssige Phase wird in der Speichersubstanz gespeichert. Wenn die Temperatur der Fassadenabdeckung nachts absinkt, erreicht die Speichersubstanz erneut die Phasenumwandlungstemperatur, wodurch eine erneute Phasenumwandlung der Speichersubstanz, beispielsweise eine Erstarrung erfolgt. Dabei wird der Speichersubstanz die durch die erste Phasenumwandlung darin eingebrachte Energie wieder entzogen und an die Umgebung abgegeben. Auf diese Weise wird der unerwünschte Temperaturabfall der gesamten Fassadenabdeckung gehemmt.

Darüber hinaus wird durch die bei einer Temperaturerhöhung der Fassadenabdeckung erfolgende Phasenumwandlung auch noch einer unerwünschten Erhöhung der Temperatur der Fassadenabdeckung entgegengewirkt, weil ein Teil der auf die Fassade auftreffenden Sonnenstrahlung bzw. Wärmestrahlung zur Phasenumwandlung benötigt wird und daher nicht zur Temperaturerhöhung zur Verfügung steht. Beim Einsatz einer die oben beschriebene Speichersubstanz aufweisenden Fassadenabdeckung ist es daher unter Vermeidung einer unerwünschten Aufheizung der Oberfläche der Fassadenabdeckung möglich, eine äußere Schicht einzusetzen, die für elektromagnetische Strahlen mit einer Wellenlänge von 0,8 bis 2,5 µm einen mittleren Reflexionskoeffizienten von weniger als 0,8, vorzugsweise weniger als 0,7 aufweist, um so in der kalten Jahreszeit das einfallende Sonnenlicht zur Erwärmung der Fassadenabdeckung bis hin zur Gebäudeheizung zu verwenden.

Die erfindungsgemäße Fassadenabdeckung weist neben den beschriebenen Reflexionseigenschaften im Bereich von 0,8 bis 2,5 µm im thermischen Spektralbereich von etwa 5 bis 50 µm einen möglichst hohen Reflexionskoeffizienten von mehr als 40 % auf. Dadurch wird die Abstrahlung der in der Speichersubstanz gespeicherten Energie und somit die Auskühlung in der kalten Jahreszeit oder nachts zusätzlich verringert. Die beschriebenen speziellen Reflexionseigenschaften können beispielsweise durch im Bereich der Oberfläche der äußeren Schicht angeordnete, spektral selektiv absorbierende Pigmente, Füllstoffe oder Bindemittel erreicht werden.

Ein weiterer Vorteil der Verwendung der oben beschriebenen Speichersubstanz ist darin zu sehen, daß durch die damit bewirkte Hemmung des Temperaturabfalls der Fassadenabdeckung der Temperaturgradient zwischen Gebäudeinnenräumen und der Umgebung verringert und dadurch ein weiterer Energiespareffekt erzielt wird.

Als Material für die Speichersubstanz bieten sich Paraffine an, weil deren Phasenübergangstemperatur durch Modifikation der Molekülketten in einem breiten Bereich variiert werden kann, wodurch eine Anpassung an die jeweiligen Einsatzbedingungen möglich ist.

Als besonders zweckmäßig hat es sich erwiesen, wenn die Speichersubstanz verkapselt ist, weil dadurch einem Ausspülen dieser Substanz aus der Fassadenabdeckung entgegengewirkt werden kann. Zur Herstellung einer erfindungsgemäßen Fassadenabdeckung geeignete verkapselte Speichersubstanzen sind beispielsweise in der EP 0 052 733 B1 und der US 4,747,240 angegeben. Der Offenbarungsgehalt dieser Schriften zur Herstellung und den Eigenschaften verkapselter Speichersubstanzen wird hiermit durch ausdrückliche Inbezugnahme in diese Beschreibung aufgenommen.

Die Speichersubstanz kann unter Sicherstellung der damit zu erzielenden Wirkung ohne Beeinträchtigung der optischen Gestaltung der Fassadenabdeckung integriert werden, wenn sie in einer Armierungsschicht und/oder einer das Beschichtungssystem tragenden Fassadenplatte einer vorgehängten Fassade oder eines Wärmedämmverbundsystems angeordnet ist.

Die erfindungsgemäße Kombination aus einer, einen Latentwärmespeicher beinhaltenden, Fassadenplatte mit einer spektral selektiven Farbbeschichtung bietet vielfältige Einsatzmöglichkeiten.

Die Technik der Wärmedämmverbundsysteme wird bereits seit über 30 Jahren erfolgreich eingesetzt. Dabei ist die Gebäudefassade ständig dem Wechselspiel der Witterung ausgesetzt. Regen, Eis und Schnee, Wind, Sonne, Frost und Hitze hinterlassen ihre Spuren. Luftschadstoffe, wie z.B. Schwefeldioxid, verbinden sich darüber hinaus mit Wasser zu aggressiven Säuren. Diese Belastungen erzeugen mit den Jahren Schäden an den Systemen, die schließlich saniert werden müssen.

Es gibt bereits Systeme für die Sanierung defekter Putze und Wärmedämmverbundsysteme, bei denen eine Putzträgerplatte einfach auf den schadhaften Untergund geklebt und ggf. verdübelt wird und anschließend neu beschichtet werden.

Verwendet man bei der Sanierung schadhafter Putzbeschichtungen und Wärmedämmverbundsysteme den erfindungsgemäßen Aufbau aus Fassadenplatte mit Latentwärmespeicher und spektral selektiven Reflexionseigenschaften, die beispielsweise durch geeignete Beschichtungen erreicht werden können, so erreicht man zusätzlichen Nutzen durch die verbesserten energetischen Eigenschaften der neuen Fassade und die Reduzierung der Verschmutzungsanfälligkeit.

Weit verbreitet sind auch Fassadensysteme mit doppelschaligem Mauerwerk aus Klinkern. Wärmedämmverbundsysteme, die die Klinkeroptik nachbilden sind bereits bekannt. Dabei werden einzelne, nur wenige Millimeter dicke Klinkerriemchen auf die Armierungsschicht des Wärmedämmverbundsystems aufgeklebt.

In Abwandlung des erfindungsgemäßen Aufbaus, kann die Fassadenplatte durch Fräsen oder Prägen an der Oberfläche in Klinkeroptik strukturiert werden. Eine Beschichtung in zwei Arbeitsgängen (Fugenfarbton und Klinkerfarbton) bzw. nur die Beschichtung der vorstehenden Flächen (Klinker) erzeugt die gewünschte Klinkeroptik. Von besonderem Vorteil ist dabei der dunkle, rote Farbton des Klinkers, da dieser Farbton hohe Absorptionswerte auch im sichtbaren Spektralbereich ermöglicht und damit die solaren Energiegewinne erhöht werden können.

In einem in der EP 0 333 145 beschriebenen Wärmedämmverbundsystem wird ein zumindest teilweise lichtdurchlässiges, außenseitig gegen Witterungseinwirkungen geschütztes Wärmedämmaterial auf einer, mit einer lichtabsorbierenden Schicht ausgestatteten, massiven Wand aufgebracht. Diese, als transparente Wärmedämmverbundsysteme bekannten Systeme, ermöglichen neben der Reduzierung von Transmissionsenergieverlusten zusätzliche solare Energiegewinne.

Nachteilig an transparenten Wärmedämmverbundsystem ist die Notwendigkeit der massiven Mauer als Wärmespeicher und die Reduzierung auf Teilflächen der Fassade bzw. die zusätzliche Verschattung zur Verhinderung von sommerlichen Überhitzungen.

Verwendet man anstatt der massiven Mauer den erfindungsgemäßen Aufbau, so ist der Einsatz des transparenten Wärmedämmverbundsystems auch im Bereich des Leichtbaus möglich. Durch die Anpassung der thermischen Speicherfähigkeit und des Temperatumiveaus an den solaren Energieeintrag, kann der Energiegewinn optimiert werden. Technisch aufwendige Verschattungen bzw. eine Reduzierung der Flächenbelegung ist bei der erfindungsgemäßen Anwendung ebenfalls nicht notwendig. Die Selektivbeschichtung wird dabei schwarz ausgeführt um die Absorption im solaren Bereich zu optimieren.

## Patentansprüche

1. Fassadenabdeckung, insbesondere in Form eines Wärmedämmverbundsystems oder einer vorgehängten Fassade mit einer zur Umgebung freiliegenden äußeren Schicht, **dadurch gekennzeichnet, daß** die Fassadenabdeckung einer der Verschmutzungsneigung ihrer äußeren Schicht erhöhenden Temperaturänderung der Oberfläche der äußeren Schicht entgegenwirkende Bestandteile in Form einer Speichersubstanz mit einer Phasenumwandlungstemperatur im Bereich von 10 bis 30 °C, vorzugsweise bei etwa 20 °C aufweist, und für von außen senkrecht darauf auftreffende elektromagnetische Wellen mit einer Wellenlänge von 0,8 bis 2,5 µm einen mittleren Reflexionskoeffizienten von weniger als 0,8 sowie für von außen darauf auftreffende elektromagnetische Wellen mit Wellenlängen von 5 bis 50 µm einen mittleren Reflexionskoeffizienten von mehr als 0,4 besitzt.

2. Fassadenabdeckung nach Anspruch 1, **dadurch gekennzeichnet, daß** die äußere Schicht eine Farbe oder ein Putz ist.

3. Fassadenabdeckung nach Anspruch 1 oder 2, **dadurch gekennzeichnet, daß** die speziellen Reflexionseigenschaften durch im Bereich der Oberfläche der äußeren Schicht angeordnete, spektral selektiv absorbierende Pigmente, Füllstoffe oder Bindemittel erreicht werden.

4. Fassadenabdeckung nach Anspruch 1, **dadurch gekennzeichnet, daß** die Speichersubstanz verkapselt ist.

5. Fassadenabdeckung nach einem der Ansprüche 1 bis 4, **dadurch gekennzeichnet, daß** die Speichersubstanz mindestens ein Paraffin aufweist.

6. Fassadenabdeckung nach einem der Ansprüche 1 bis 5, **dadurch gekennzeichnet, daß** die Speichersubstanz in einer Armierungsschicht und/oder einer, die äußere Schicht tragenden Fassadenplatte einer vorgehängten Fassade oder eines Wärmedämmverbundsystems angeordnet ist.

7. Fassadenabdeckung nach Anspruch 6, **dadurch gekennzeichnet, daß** die Fassadenplatte z.B. in Klinkeroptik strukturiert wird und die spektral selektive Beschichtung nur auf den äußeren Flächen aufgebracht wird.

8. Fassadenabdeckung nach einem der vorhergehenden Ansprüche, **dadurch gekennzeichnet, daß** die äußere Schicht eine vorzugsweise auf einer das Speichermaterial aufweisenden und mit einer spektral selektiven Beschichtung versehenen Fassadenplatte angeordnete transparente Wärmedämmschicht ist.

## Claims

1. Façade covering, particularly in the form of a composite thermal insulation system or a curtain wall with an outer layer exposed to the surroundings, **characterised in that** the façade covering comprises components counteracting a change in the temperature of the surface of the outer layer increasing the dirt retention of the outer layer, in the form of a storage substance with a phase-transition temperature in the region of 10 to 30°C, preferably approximately 20°C, and has a mean reflection coefficient of less than 0.8 for electromagnetic waves having a wavelength of 0.8 to 2.5 µm normally incident thereon from the outside and a mean reflection coefficient of more than 0.4 for electromagnetic waves having wavelengths of 5 to 50 µm incident thereon from the outside.

2. Façade covering according to claim 1, **characterised in that** the outer layer is a paint or a plaster.

3. Façade covering according to claim 1 or claim 2, **characterised in that** the special reflective characteristics are achieved by spectrally selectively absorbing pigments, fillers or binders arranged in the region of the surface of the outer layer.

4. Façade covering according to claim 1, **characterised in that** the storage substance is encapsulated.

5. Façade covering according to one of claims 1 to 4, **characterised in that** the storage substance comprises at least one paraffin.

6. Façade covering according to one of claims 1 to 5, **characterised in that** the storage substance is arranged in a reinforcing layer and/or a façade panel of a curtain wall or a composite thermal insulation system bearing the outer layer.

7. Façade covering according to claim 6, **characterised in that** the façade panel is textured, e.g. to give the appearance of engineering bricks, and the spectrally selective coating is applied only to the outer surfaces.

8. Façade covering according to one of the preceding claims, **characterised in that** the outer layer is a transparent heat-insulating layer preferably arranged on a façade panel comprising the storage material and provided with a spectrally selective coating.

## Revendications

1. Revêtement de façade, en particulier sous la forme d'un système lié à un isolant thermique ou d'une façade placée devant celui-ci avec une couche externe librement exposée à l'entourage, **caractérisé en ce que** le revêtement de façade présente des composants s'opposant à une modification de température élevée de surface de la couche extérieure tendant à augmenter l'encrassement de sa couche extérieure, sous forme d'une substance à accumulation avec une température de changement de phase comprise dans l'intervalle de 10 à 30° C, située de préférence à environ 20°C et qui possède pour les ondes électromagnétiques qui le frappent perpendiculairement de l'extérieur, avec une longueur d'onde de 0,8 à 2,5 µm, un coefficient de réflexion moyen inférieur à 0,8 ainsi que pour les ondes électromagnétiques qui le frappent de l'extérieur avec des longueurs d'onde de 5 à 50 µm, un coefficient de réflexion moyen de plus de 0,4.

2. Revêtement de façade selon la revendication 1, **caractérisé en ce que** la couche extérieure est une peinture ou un enduit.

3. Revêtement de façade selon la revendication 1 ou 2, **caractérisé en ce que** les propriétés de réflexion spécifiques sont introduites dans la zone de surface de la couche extérieure, par des pigments, des matières de remplissage et des mastics à absorption sélective de spectre.

4. Revêtement de façade selon la revendication 1, **caractérisé en ce que** la substance d'accumulation est encapsulée.

5. Revêtement de façade selon l'une quelconque des revendications 1 à 4, **caractérisé en ce que** la substance à accumulation présente au moins une paraffine.

6. Revêtement de façade selon l'une quelconque des revendications 1 à 5, **caractérisé en ce que** la substance à accumulation est aménagée dans une couche d'armature et/ou une plaque de façade portant la couche extérieure d'une façade placée en avant de celle-ci ou d'un système de liaison à l'isolant thermique.

7. Revêtement de façade selon la revendication 6, **caractérisé en ce que** la plaque de façade est structurée en optique à clins et la couche sélective de spectre n'est aménagée que sur les surfaces extérieures.

8. Revêtement de façade selon l'une quelconque des revendications précédentes, **caractérisé en ce que** la couche externe est de préférence une couche d'isolation thermique transparente aménagée sur une plaque de façade présentant le matériau à accumulation et dotée d'une couche sélective de spectre.
